# EUROPÄISCHE PATENTANMELDUNG

(11) **EP 2 876 293 A2**
(43) Veröffentlichungstag der Anmeldung: **27.05.2015**
(21) Anmeldenummer: 14194310.0
(22) Anmeldetag: 21.11.2014
(51) Int. Cl.: F02M 37/10, H05B 1/02

(54) **Tankmodul für einen Flüssigkeitstank**

(30) Priorität: 22.11.2013 DE 202013010565 U
(71) Anmelder: Seuffer GmbH & Co. KG, 75365 Calw-Hirsau (DE)
(72) Erfinder: Ditscheid, Hans Erich, 75059 Zaisenhausen (DE); Tritt, Gerhard, 72218 Wildberg (DE)
(74) Vertreter: Winter, Brandl, Fürniss, Hübner, Röss, Kaiser, Polte - Partnerschaft mbB

(57) **Zusammenfassung**

Die Erfindung betrifft ein Tankmodul zum Einsetzen in einen Öffnungsbereich eines Tanks, der eine Flüssigkeit enthält, die mittels einer Entnahmeeinrichtung (7, 8, 16, 18) entnommen werden kann. Das Tankmodul umfasst eine benachbart zu der Entnahmeeinrichtung (7, 8, 16, 18) angeordnete Heizeinrichtung (19), die zumindest zwei Heizelemente aufweist, die unabhängig voneinander angesteuert werden können und in einem thermischen Kontakt zur Flüssigkeit stehen, und eine Steuerungseinrichtung (9), die mit der Heizeinrichtung (19) verbunden ist zur individuellen Ansteuerung der zumindest zwei Heizelemente der Heizeinrichtung (19), so dass eines der Heizelemente zur Abgabe von Wärme und das andere zumindest zeitweilig zur Erfassung der Temperatur der Flüssigkeit angesteuert wird.

## Beschreibung

Die vorliegende Erfindung betrifft ein Tankmodul für einen Flüssigkeitstank, und insbesondere ein Tankmodul mit Einrichtungen zur Erfassung der Eigenschaften der Flüssigkeit und zur Behandlung derselben.

In bekannter Weise befinden sich in einem Tank Brennstoffe oder weitere Hilfsstoffe zur Unterstützung oder Verbesserung der Verbrennung, wobei diese Hilfsstoffe im Allgemeinen in einem separaten Tank oder Behälter in einem Kraftfahrzeug mitgeführt werden, oder der separate Tank in Verbindung mit einer industriellen Maschine angeordnet ist, in der die Hilfsstoffe verwendet werden. Derartige Hilfsstoffe liegen beispielsweise in der Form von fluiden Reduktionsmitteln zur Verminderung schädlicher Komponenten im Abgas von Brennkraftmaschinen vor.

Durch die Verbrennung eines Brennstoffs in Brennkraftmaschinen werden in den Abgasen der Verbrennung umweltschädliche Stoffe gebildet, so dass eine zumindest teilweise Reinigung der Abgase erforderlich ist. Insbesondere ist es erforderlich, die Abgase von Diesel-Brennkraftmaschinen zumindest teilweise zu reinigen, wobei in Verbindung mit verschärften gesetzlichen Bestimmungen der Anteil an Stickoxiden (NOx) erheblich vermindert werden kann.

Hierzu wird in einer Abgasanlage einer Diesel-Brennkraftmaschine in Verbindung mit einem gasförmigen Ammoniak als Reduktionsmittel, das in den Abgasstrom eingebracht wird, der Anteil der Stickoxide des Abgases vermindert, wobei das gasförmige Ammoniak mit den Stickoxiden des Abgases selektiv zu Stickstoff und Wasser reagiert.

Das gasförmige Ammoniak wird bereitgestellt durch Zuführen einer wässrigen Harnstofflösung in die Abgasanlage bzw. den Abgasstrom der Diesel- Brennkraftmaschine. Die wässrige Harnstofflösung wird zusätzlich zu dem Brennstoff für die Brennkraftmaschine in geringerer Menge und in einem separaten Tank mitgeführt.

Hinsichtlich des Betriebs der Fahrzeuge mit derartigen Reduktionsmitteln und speziell in Verbindung mit der wässrigen Harnstofflösung ist bei winterlichen Temperaturen erheblich unter 0°C zu beachten, dass die wässrige Harnstofflösung bei etwa -11 °C ausflockt bzw. gefriert. Der besondere Tank für die wässrige Harnstofflösung bedarf somit einer Heizung, um bei tiefen Temperaturen zumindest einen Teil der im Tank befindlichen Harnstofflösung kurzfristig flüssig zu halten oder zu verflüssigen, so dass auch unter diesen Bedingungen ein Einbringen in den Abgasstrom möglich ist.

In diesem Zusammenhang offenbart die Druckschrift DE 10 2006 027 487 A1 einen Fahrzeugtank für ein flüssiges Reduktionsmittel (beispielsweise eine wässrige Harnstofflösung), wobei der Tank mehrere Kammern aufweist und in einer der Kammern in Form eines Innenbehälters eine integrierte elektrische Heizung in Verbindung mit einer Saugleitung zur Entnahme des flüssigen Reduktionsmittels vorgesehen ist. Das flüssige Reduktionsmittel wird durch ein oberhalb des Tanks angeordnetes Fördermodul angesaugt. In dem Fördermodul ist hierzu eine Pumpe vorgesehen.

Die Druckschrift DE 10 2007 050 272 A1 offenbart einen Tank zur Bevorratung eines Reduktionsmittels, wobei an vorbestimmten Stellen in dem Tank, in dem ein zusätzlicher Innenbehälter vorgesehen ist, das Reduktionsmittel in Form einer wässrigen Harnstofflösung mittels einer Heizeinrichtung beheizt wird. Die Entnahme der Harnstofflösung geschieht mittels einer entsprechenden Saugleitung und in Verbindung mit einer zugehörigen Rücklaufleitung. Es besteht eine thermische Kopplung der Rücklaufleitung mit der Heizeinrichtung zur Beeinflussung des Auftauens der bei entsprechenden Umgebungsbedingungen gefrorenen wässrigen Harnstofflösung. Das Fördermodul umfasst ferner ein Filter an der Mündung der Saugleitung.

Die Druckschrift DE 10 2010 024 554 A1 offenbart ein Tankmodul, das in einem Flüssigkeitstank eingesetzt werden kann, wobei ein Filter und eine Pumpe in der Nähe eines Auslassbereichs angeordnet sind. In dem Tankmodul sind Temperatursensoren vorgesehen zur Erfassung der Temperatur des Fluids in dem Tank, und es ist eine Heizeinrichtung vorgesehen, mittels der das Fluid in vorbestimmter Weise aufgeheizt und in Verbindung mit tiefen Temperaturen wieder verflüssigt werden kann.

Gemäß der DE 10 2010 038 361 A1 wird ein PTC-Widerstand als eine Heizeinrichtung eingesetzt, die auch zur Temperaturerfassung verwendet wird, wobei lediglich die Temperatur der Heizeinrichtung selbst erfassbar ist. Gemäß der DE 10 2011 002 902 A1 wird eine Einschaltinformation für eine Heizeinrichtung für einen Tank zur Bevorratung einer wässrigen Harnstofflösung gewonnen durch einen Temperatursensor in einer Füllstandmesseinrichtung und einen Temperatursensor zur Erfassung der Umgebungsbedingungen einer entsprechenden Maschine.

Die vorstehend beschriebenen bekannten Heizeinrichtungen dienen im Wesentlichen dazu, das in dem Tank befindliche Fluid oder die Flüssigkeit (beispielsweise eine wässrige Harnstofflösung) vor einem Einfrieren zu bewahren oder nach dem Einfrieren bei tiefen Umgebungstemperaturen ein Auftauen zu bewirken. Die bekannten Heizeinrichtungen sind jedoch im Wesentlichen in der Lage, lediglich einen begrenzten Raum innerhalb des Tankmoduls und auch innerhalb des Tanks in entsprechender Weise zu erwärmen, um den Schutz vor einem Einfrieren oder das Auftauen wirksam zu erreichen. Insbesondere ist es schwierig, eine Temperaturregelung des Aufheizens der Flüssigkeit in dem Behälter durchzuführen, da mit den vorgesehenen Temperatursensoren nicht immer eine verlässliche Information über die aktuelle Temperatur der Flüssigkeit in dem Tank erhalten werden kann, insbesondere, wenn die Heizeinrichtung kompakt ausgeführt ist und sich der Temperatursensor in einem bestimmten Abstand zur Heizeinrichtung befindet. Eine mangelnde Erwärmung der Flüssigkeit und damit ein verzögertes Auftauen oder eine lokale erhöhte Erwärmung können die Folge sein. Dies führt jedoch in Abhängigkeit von der Art der Flüssigkeit in dem Tank zumindest teilweise zu unerwünschten Änderungen der Eigenschaften der Flüssigkeit.

Der vorliegenden Erfindung liegt daher die Aufgabe zugrunde, ein Tankmodul für einen Flüssigkeitstank der eingangs genannten Art derart auszugestalten, dass auf einfache Weise eine effektive Erwärmung und eine genaue Erfassung der Temperatur der Flüssigkeit gewährleistet sind.

Erfindungsgemäß wird diese Aufgabe mit den in den Schutzansprüchen angegebenen Merkmalen gelöst.

Die Erfindung betrifft ein Tankmodul zum Einsetzen in einen Öffnungsbereich eines Tanks, der eine Flüssigkeit enthält, die mittels einer Entnahmeeinrichtung entnommen werden kann. Das Tankmodul umfasst eine benachbart zu der Entnahmeeinrichtung angeordneten Heizeinrichtung, die zumindest zwei Heizelemente aufweist, die unabhängig voneinander angesteuert werden können und in einem thermischen Kontakt zur Flüssigkeit stehen, und eine Steuerungseinrichtung, die mit der Heizeinrichtung verbunden ist zur individuellen Ansteuerung der zumindest zwei Heizelemente der Heizeinrichtung, so dass eines der Heizelemente zur Abgabe von Wärme und das andere zumindest zeitweilig zur Erfassung der Temperatur der Flüssigkeit angesteuert wird.

Mit der erfindungsgemäßen Anordnung kann somit erreicht werden, dass einerseits in effektiver Weise die im Tank befindliche Flüssigkeit in vorbestimmter Weise aufgewärmt wird, und dass gleichzeitig eine genaue und aussagekräftige Erfassung der Temperatur gewährleistet ist, so dass beispielsweise in Verbindung mit der Temperaturerfassung eine Regelung der der Heizeinrichtung zugeführten Heizleistung möglich ist. Die Heizeinrichtung des erfindungsgemäßen Tankmoduls ist in der Weise ausgebildet, dass zumindest zwei Heizelemente vorgesehen sind und dass die Heizelemente getrennt angesteuert werden können, so dass ein Teil der Heizeinrichtung zum Bewirken einer Aufheizung angesteuert wird, während ein weiterer Teil der Heizeinrichtung unabhängig vom ersten Teil der Heizeinrichtung zumindest zeitweilig zur genauen Erfassung der Temperatur der Flüssigkeit dienen kann.

Auf diese Weise wird ein verlässliches Erfassungsergebnis der aktuellen Temperatur der Flüssigkeit erhalten, so dass darauf aufbauend die Heizleistung gesteuert oder auch geregelt werden kann. Die Aufheizung der Flüssigkeit und die Temperaturerfassung können gleichzeitig erfolgen. Mit der erfindungsgemäßen Anordnung der zumindest zwei Heizelemente der Heizeinrichtung sind das der Heizung dienende und das der Temperaturerfassung dienende Heizelement benachbart zueinander angeordnet, so dass auch in thermischer Hinsicht keine oder nur eine sehr geringe (im Allgemeinen vernachlässigbare) Verzögerung der Erfassung einer aktuellen Temperatur auftreten kann. Eine Steuerungseinrichtung kann hierfür die entsprechende Ansteuerung der zumindest zwei Heizelemente vornehmen, so dass zumindest ein Heizelement mit Heizleistung versorgt wird (elektrische Werte von Strom und Spannung) und das andere Heizelement in Verbindung mit der Erfassung seiner elektrischen Werte (Strom, Spannung, Widerstand) eine aktuelle und verlässliche (uns speziell eine rasche) Temperaturinformation liefert. Es besteht ferner die Möglichkeit, bei dem Vorhandensein eines weiteren Temperatursensors die jeweiligen Erfassungswerte zu vergleichen und Korrekturen vorzunehmen bzw. die Erfassungswerte auf eine Plausibilität zu prüfen.

Ein sicherer Betrieb einer Maschine in Verbindung mit dem erfindungsgemäßen Tankmodul, und beispielsweise ein sicherer Betrieb einer Diesel-Brennkraftmaschine in Verbindung mit der Verwendung einer wässrigen Harnstofflösung zur Abgasreinigung ist somit gewährleistet. Ungeachtet möglicher niedriger Außentemperaturen kann in geregelter Weise eine entsprechend temperierte Flüssigkeit, wie beispielsweise das genannte Reduktionsmittel, zur Verfügung gestellt werden, und im Falle sehr tiefer Außentemperaturen unter -11 °C und bei Abstellen beispielsweise des Kraftfahrzeugs im Freien kann schnell eine Aufheizung der Flüssigkeit und bedarfsweise ein Auftauen mit entsprechender genauer Temperaturüberwachung durchgeführt werden.

Das Tankmodul ist des Weiteren auf einfache Weise zu fertigen, da das Tankmodul keine bestimmte Form aufweisen muss und die Heizeinrichtung gemäß der vorliegenden Erfindung und den nachstehend noch beschriebenen Ausführungsbeispielen in guter Wärmekopplung mit der Flüssigkeit (beispielsweise dem Reduktionsmittel oder einer sonstigen Flüssigkeit) steht, so dass zwischen dem der Aufheizung dienenden Heizelement und dem der Temperaturerfassung dienenden Heizelement über die Flüssigkeit in dem Tank (und somit auch in dem Tankmodul) eine gute Wärmeübertragung gewährleistet ist.

Die Heizeinrichtung kann hierbei in einem vorbestimmten Bereich in dem Tankmodul angeordnet werden, und befindet sich insbesondere in einem unteren Bereich und in der Umgebung einer Auslassöffnung im Tankmodul, so dass in der unmittelbaren Umgebung der Auslassöffnung nach dem Starten der Diesel-Brennkraftmaschine (bei entsprechend tiefen Umgebungstemperaturen) schnell eine Verflüssigung des Reduktionsmittels erreicht werden kann. Im Verlauf des Betriebs kann dann die weitere Umgebung um die Auslassöffnung und schließlich die Gesamtmenge des fluiden Reduktionsmittels in entsprechender Weise aufgewärmt und aufgetaut werden.

Gemäß einem weiteren Aspekt der vorliegenden Erfindung ist ein Tankmodul vorgesehen zum Einsetzen in einen Öffnungsbereich eines Tanks, der eine Flüssigkeit enthält, die mittels einer Entnahmeeinrichtung entnommen werden kann. Das Tankmodul umfasst eine benachbart zu der Entnahmeeinrichtung angeordneten Heizeinrichtung, die ein Heizelement aufweist, das in einem thermischen Kontakt zur Flüssigkeit steht und das zur Aufheizung der Flüssigkeit und/oder zur Erfassung der Temperatur der Flüssigkeit angesteuert werden kann, und eine Steuerungseinrichtung, die mit der Heizeinrichtung verbunden ist zur Ansteuerung des Heizelements der Heizeinrichtung, so dass das Heizelement zeitweilig zur Abgabe von Wärme und /oder zeitweilig zur Erfassung der Temperatur der Flüssigkeit angesteuert wird.

Hierdurch wird eine Vereinfachung des Tankmoduls erreicht, wobei die Heizeinrichtung zur Aufheizung oder Temperaturerfassung jeweils zeitweilig und nicht zeitlich überlappend oder auch gleichzeitig angesteuert werden.

Weitere Ausgestaltungen der Erfindung sind in den abhängigen Schutzansprüchen angegeben.

In dem Tankmodul können die zumindest zwei Heizelemente der Heizeinrichtung für eine gleiche oder unterschiedliche Heizleistung ausgebildet sein.

Die zumindest zwei Heizelemente der Heizeinrichtung können benachbart und isoliert zueinander angeordnet sein, und es kann die Steuerungseinrichtung ausgebildet sein, zeitweilig die beiden Heizelemente zur Abgabe einer Heizleistung anzusteuern.

In dem Tankmodul können die zumindest zwei Heizelemente der Heizeinrichtung als drahtförmiger Heizwiderstände ausgebildet sein, oder es können die zumindest zwei Heizelemente der Heizeinrichtung als flächige Widerstandsbereiche ausgebildet sein.

Die flächigen Widerstandsbereiche können gleich große oder unterschiedliche Flächen aufweisen, und es können die flächigen Widerstandsbereiche unregelmäßig geformte Flächen aufweisen, wobei Flächen eines der Widerstandsbereiche Flächen des anderen Widerstandsbereichs teilweise umgeben.

Die flächigen Widerstandsbereiche der zumindest zwei Heizelemente der Heizeinrichtung können als folienförmige oder gedruckte Widerstandsbereiche ausgebildet und auf einer ebenen oder gekrümmten Grundplatte des Tankmoduls angeordnet sein. Die zumindest zwei Heizelemente der Heizeinrichtung können als drahtförmige Heizwiderstände ausgebildet sein, und es kann die Entnahmeeinrichtung eine Filtereinrichtung aufweisen, wobei die Heizwiderstände zumindest teilweise die Filtereinrichtung umgeben können.

In dem Tankmodul können die zumindest zwei Heizelemente der Heizeinrichtung als drahtförmige Heizwiderstände ausgebildet sein, und die Entnahmeeinrichtung kann eine Filtereinrichtung und ein Pumpe aufweisen, wobei die Heizwiderstände zumindest teilweise die Filtereinrichtung umgeben können, und wobei ein weiteres Heizelement vorgesehen sein kann, das benachbart zu der Pumpe oder diese zumindest teilweise umgebend angeordnet sein kann.

In dem Tankmodul kann das Heizelement der Heizeinrichtung als ein drahtförmiger Heizwiderstand ausgebildet sein, oder es kann das Heizelement der Heizeinrichtung als flächiger Widerstandsbereich ausgebildet sein.

Der flächige Widerstandsbereich des Heizelements der Heizeinrichtung kann als folienförmiger oder gedruckter Widerstandsbereich ausgebildet und auf einer ebenen oder gekrümmten Grundplatte des Tankmoduls angeordnet sein.

Das Heizelement der Heizeinrichtung als drahtförmiger Heizwiderstand ausgebildet sein, und es kann die Entnahmeeinrichtung eine Filtereinrichtung aufweisen und der Heizwiderstand kann zumindest teilweise die Filtereinrichtung umgeben.

Die Erfindung wird nachstehend anhand von Ausführungsbeispielen unter Bezugnahme auf die Zeichnung näher erläutert. Die Figuren zeigen:
Fig. 1 eine Gesamtdarstellung eines Tanks zur Bevorratung einer Flüssigkeit in Form einer Teil-Schnittansicht, wobei das Tankmodul in den Tank eingesetzt ist,
Fig. 2 eine detaillierte Darstellung der Anordnung des Tankmoduls im Tank, wobei die Darstellung des Tankmoduls auf die wesentlichen Komponenten reduziert ist,
Fig. 3 eine vereinfachte schematische Darstellung von Teilen des Tankmoduls in einer perspektivischen Ansicht zur Veranschaulichung der einzelnen Komponenten und ihrer Anordnung gemäß einem ersten Ausführungsbeispiel der Erfindung,
Fig. 4 ein Blockschaltbild zur Veranschaulichung der elektrischen Verbindungen zu den einzelnen Komponenten des Tankmoduls gemäß Fig. 3,
Fig. 5 eine detaillierte Darstellung des Aufbaus der Heizeinrichtung gemäß dem ersten Ausführungsbeispiel,
Fig. 6 eine schematische vereinfachte Darstellung eines Teils des Tankmoduls gemäß einem zweiten Ausführungsbeispiels der vorliegenden Erfindung, und
Fig. 7 eine detaillierte Darstellung des Aufbaus der Heizeinrichtung des Tankmoduls gemäß dem zweiten Ausführungsbeispiel.

### Erstes Ausführungsbeispiel:

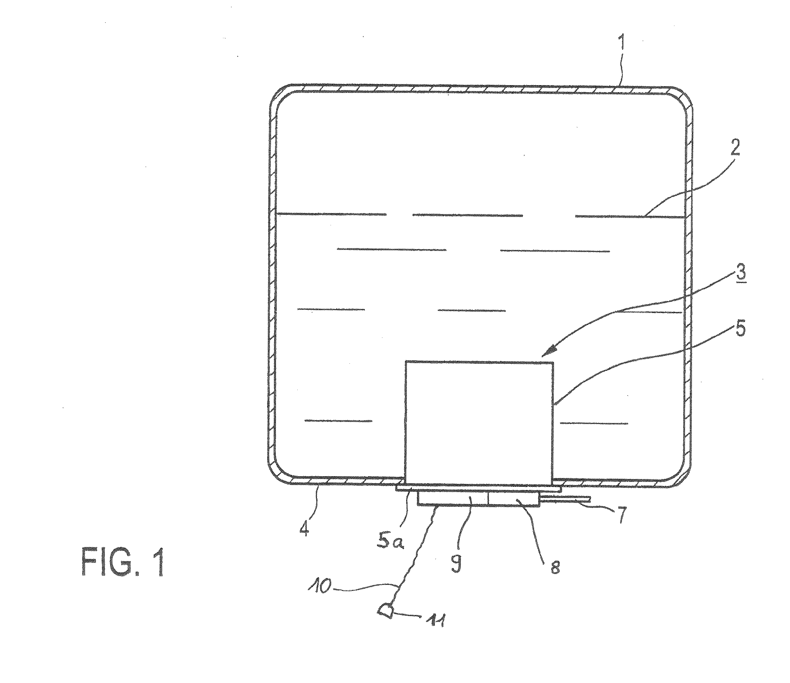

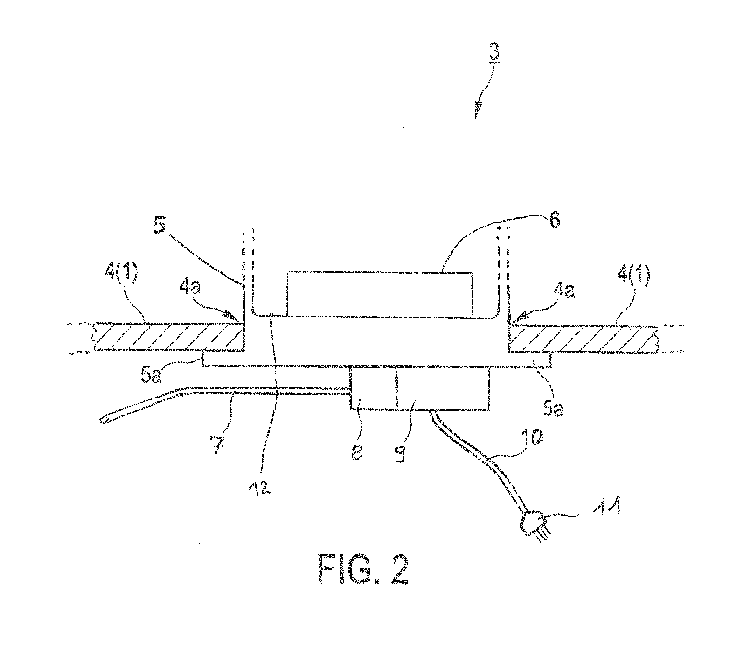

Nachstehend werden in Verbindung mit den Figuren 1 und 2 die grundsätzliche Anordnung und die Anwendung des Tankmoduls in einem Tank dargestellt.

Fig. 1 zeigt in einer teilweisen Schnittansicht einen Tank 1 in einer allgemeinen Anordnung, wie er beispielsweise in einem Kraftfahrzeug oder in einer sonstigen Einrichtung wie einer industriellen Maschine oder dergleichen angeordnet sein kann. In dem Tank 1 befindet sich ein Fluid wie beispielsweise ein Brennstoff, Wasser oder ein flüssiges Reduktionsmittel, wie beispielsweise eine wässrige Harnstofflösung zur Entnahme bevorratet werden kann.

Die nachfolgende Beschreibung bezieht sich beispielhaft auf die Anordnung des in Fig. 1 gezeigten Tanks 1 zur Bevorratung eines Fluids oder eines flüssigen Reduktionsmittels, wobei die vorliegende Erfindung hierauf nicht beschränkt ist und das erfindungsgemäße Tankmodul in beliebigen Behältern oder Tanks verwendet werden kann, ungeachtet dessen, welche Art eines Fluids in dem jeweiligen Behälter oder Tank bevorratet ist. Zur vereinfachten Darstellung der vorliegenden Erfindung erfolgt die Beschreibung in Verbindung mit dem Tank 1 (Behälter) zur Bevorratung eines flüssigen Reduktionsmittels, wie beispielsweise einer wässrigen Harnstofflösung. Das flüssige Reduktionsmittel wird nachstehend vereinfacht als eine Flüssigkeit 2 bezeichnet.

In dem Tank 1 weist im Allgemeinen die Flüssigkeit 2 einen bestimmten Füllstand auf, der höher ist als ein in dem Tank eingesetztes Tankmodul 3 mit der erfindungsgemäßen Anordnung. Das Tankmodul 3 wird vollständig von der Flüssigkeit 2 umströmt und befindet sich ferner in einem unteren Teil des Tanks 1, so dass sichergestellt ist, dass auch bei einer niedrigen Füllhöhe (geringer Füllstand) die Flüssigkeit 2 in ausreichendem Maß das Tankmodul 3 umströmt.

Das Tankmodul 3 ist in der in Fig. 1 gezeigten Anordnung beispielsweise von unten in den Tank 1 eingesetzt, wobei die vorliegende Erfindung hierauf nicht festgelegt ist, und das Tankmodul 3 auch von oben in den Tank 1 eingesetzt werden kann. Das Tankmodul 3 befindet sich jedoch in einen unteren Bereich des Tanks 1. Das von unten in den Tank 1 eingesetzte Tankmodul 3 ist gegenüber dem Tank 1 in ausreichendem Maße abgedichtet, so dass keine Flüssigkeit 2 nach außen dringen kann. Entsprechende Dichtungen sind zur Vereinfachung der Darstellung weggelassen.

Das Tankmodul 3 ist in Fig. 1 als topfförmiges Gebilde dargestellt, das in eine Bodenbereich 4 des Tanks 1 eingesetzt ist. Der Tank 1 weist somit eine Einsetzöffnung 4a im Bodenbereich 4 auf. Das Tankmodul 3 weist ein topfförmiges Gehäuse 5 auf, das in Fig. 1 schematisch gezeigt und in Fig. 2 angedeutet ist.

Ein Flanschbereich 5a kann nach dem Einsetzen des Tankmoduls 3 in den Tank 1 am Boden des Tanks 1 (innen oder außen) mit entsprechenden Dichtungen anliegen.

Fig. 2 zeigt innerhalb des Tankmoduls 3 an seiner in Fig. 2 oben liegenden Fläche einen Funktionsbereich 6, der in allgemeiner Form veranschaulicht, dass in dem Tankmodul 3 weitere Komponenten und Bauteile angeordnet sind, mittels denen bestimmte Funktionen erreicht werden. Diese Bauteile und Komponenten dienen einerseits zur Erfassung der Eigenschaften der Flüssigkeit und andererseits zur Behandlung derselben und werden nachstehend hinsichtlich ihres Aufbaus und ihrer jeweiligen Funktion noch im Einzelnen beschrieben. Mit dem allgemeinen Funktionsbereich 6 wird lediglich veranschaulicht, dass weitere Komponenten in diesem Bereich des Tankmoduls 3 vorgesehen sind.

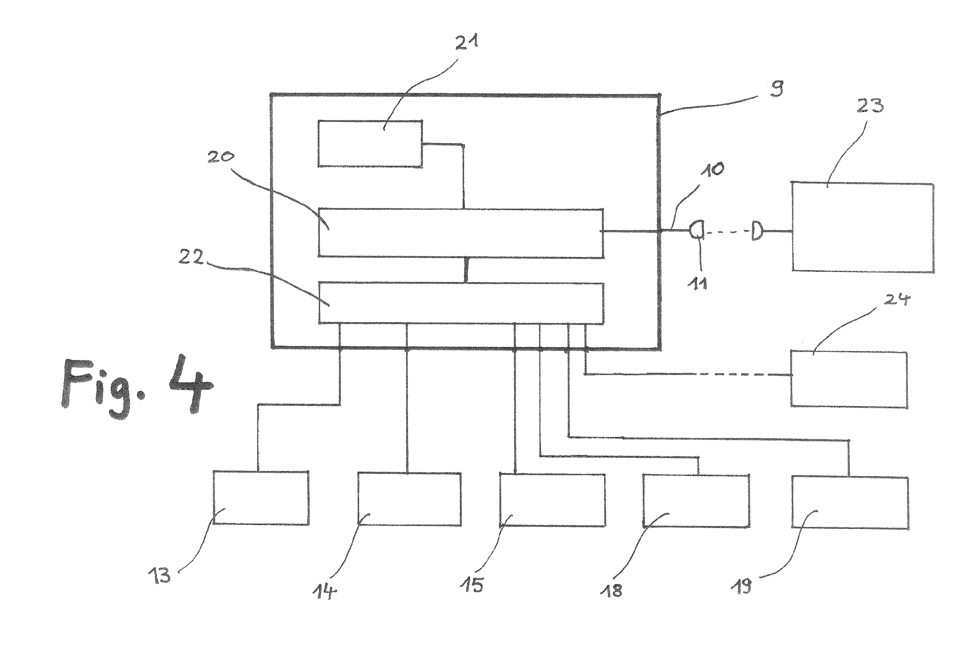

An der unteren Oberfläche des Tankmoduls 3 ist ein Entnahmerohr 7 gezeigt, das an einem Auslaufbereich 8 angeordnet ist. Zum Betreiben der im Funktionsbereich 6 angeordneten Mehrzahl von Komponenten ist eine Steuerungseinrichtung 9 vorgesehen, die derart ausgebildet ist, dass die einzelnen nachstehend noch beschriebenen Komponenten betrieben und Erfassungen durchgeführt werden können. Die Steuerungseinrichtung 9 weist zum Anschluss an eine Leistungsversorgungseinrichtung und/oder eine externe Computeranlage (23, Fig. 4) eine vielpolige Verbindungsleitung 10 auf. Die Verbindungsleitung 10 kann eine entsprechende Steckereinrichtung 11 zur Bereitstellung der erforderlichen Anschlüsse aufweisen.

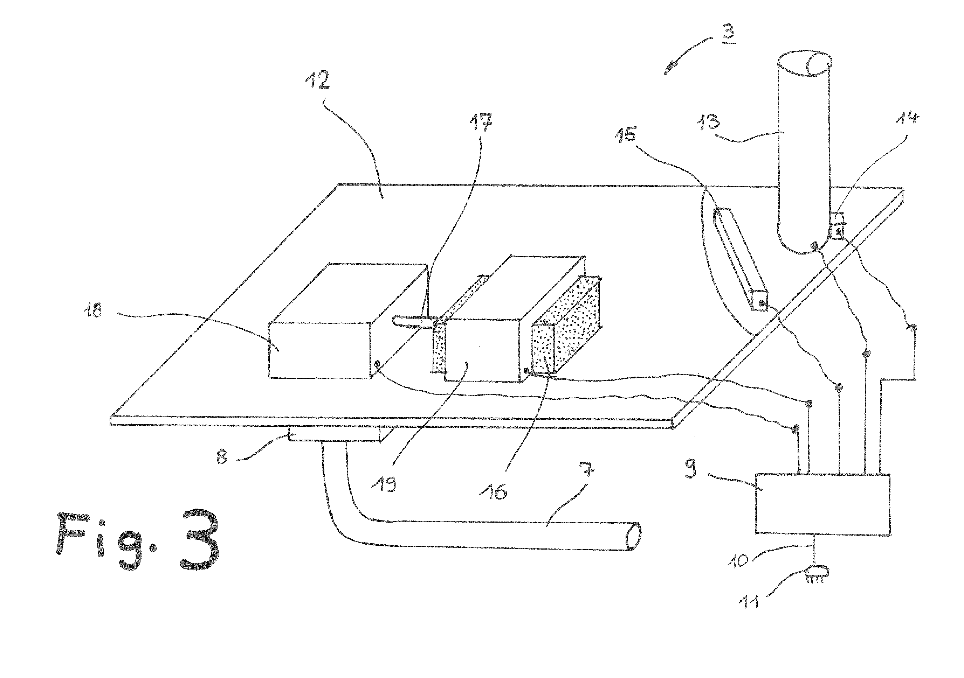

Auf der Basis der grundlegenden Anordnung des Tankmoduls 3, wie sie vorstehend in Verbindung mit den Figuren 1 und 2 beschrieben wurde, werden nachstehend im Einzelnen unter Bezugnahme auf Fig. 3 die Komponenten des Funktionsbereichs 6 beschrieben.

In Fig. 3 ist schematisch und in vereinfachter Form ein Teil des Tankmoduls 3 gemäß dem ersten Ausführungsbeispiel dargestellt, wobei sich die Darstellung auf den Abschnitt des Tankmoduls 3 beschränkt, der dem Funktionsbereich 6 entspricht. Die weiteren Einzelheiten des Tankmoduls 3 sind zur Vereinfachung der Darstellung weggelassen. Als Teil des Gehäuses 5 des Tankmoduls 3 ist eine Grundplatte 12 vorgesehen, auf der die nachstehend beschriebenen Komponenten des Funktionsbereichs 6 angeordnet sind.

Im Einzelnen umfasst das Tankmodul 3 gemäß Fig. 3 verschiedene Erfassungseinrichtungen und weitere Einrichtungen zur Durchführung von Maßnahmen zur Behandlung des fluiden Mediums in Form der Flüssigkeit 2. Die nachstehend beschriebenen Komponenten des Tankmoduls 3 sind von der Flüssigkeit 2 umspült oder befinden sich in der Flüssigkeit 2.

Gemäß Fig. 3 ist auf der Grundplatte 12 eine Füllstand-Erfassungseinrichtung vorgesehen, die nachstehend als Füllstandmesser 13 bezeichnet wird. Der Füllstandmesser 13 umfasst (in den Figuren nicht gezeigte) Einrichtungen zum Senden von Ultraschallsignalen in die Flüssigkeit 2 und Empfangen reflektierter Ultraschallsignale aus der Flüssigkeit 2, so dass in Abhängigkeit von der gesamten Laufzeit der empfangenen Ultraschallsignale auf eine Füllhöhe oder einen Füllstand der Flüssigkeit 2 in dem Tank 1 geschlossen werden kann. Die hauptsächliche Reflexion der Ultraschallsignale findet an der Oberfläche der Flüssigkeit 2 statt. Der Füllstandmesser 13 ist mit der Steuerungseinrichtung 9 über entsprechende Verbindungsleitungen verbunden, so dass Daten und Anweisungen (bidirektional) sowie eine erforderliche elektrische Leistung übertragen werden können.

Das Tankmodul 3 umfasst ferner eine erste Temperaturerfassungseinrichtung, die nachstehend als erster Temperatursensor 14 bezeichnet wird. Der erste Temperatursensor 14 steht in unmittelbarer Verbindung mit dem Füllstandmesser 13 und erfasst die Temperatur der Flüssigkeit im Inneren des Füllstandmessers 13 und in dessen unmittelbarer Umgebung, so dass bei der Erfassung der Laufzeit der Ultraschallsignale zur Bestimmung des Füllstands der Flüssigkeit 2 im Tank 1 die Temperatur der Flüssigkeit 2 im Bereich des Füllstandmessers 13 berücksichtigt werden kann.

Das Tankmodul 3 umfasst ferner einen Eigenschaftensensor 15, der ausgebildet ist zur Erfassung der Eigenschaften der Flüssigkeit 2. Der Eigenschaftensensor 15 kann dabei Einrichtungen zur Durchführung von Erfassungen beispielsweise mittels Impedanzspektroskopie oder auch zur Erfassung einer Trübung der Flüssigkeit 2 (als Hinweis auf Fremdstoffe in der Flüssigkeit 2) aufweisen, so dass in Verbindung mit den Erfassungsergebnissen des Eigenschaftensensors 15 auf eine physikalische und/oder chemische Beschaffenheit der Flüssigkeit 2 geschlossen werden kann, wie beispielsweise eine Konzentration der wässrigen Harnstofflösung. In Verbindung mit dem Reduktionsmittel in Form der wässrigen Harnstofflösung ist es erforderlich, dass diese Lösung eine bestimmte Konzentration von Harnstoff im Wasser aufweist, da bei abweichenden Konzentrationen die Effektivität der Abgasreinigung verschlechtert ist. Somit kann mittels des Tankmoduls 3 und des daraufangeordneten Eigenschaftensensors 15 beispielsweise die aktuelle Konzentration der Flüssigkeit 2 (als Lösung bestimmter chemischer Substanzen) ermittelt werden. Der Eigenschaftensensor 15 steht ebenfalls mit entsprechenden Verbindungsleitungen mit der Steuerungseinrichtung 9 in Verbindung zur Übertragung von Daten und elektrischer Leistung.

Das Tankmodul 3 umfasst ferner eine Filtereinrichtung 16, die über ein Verbindungselement 17 mit einer Pumpe 18 verbunden ist. Zur Entnahme der Flüssigkeit 2 aus dem Tank 1 strömt die Flüssigkeit 2 durch die Filtereinrichtung 16 und in entsprechend gefilterter Form durch das Verbindungselement 17 zur Pumpe 18, die die (gefilterte) Flüssigkeit 2 über das Entnahmerohr 7 und den Auslaufbereich 8 zu einer (nicht gezeigten) Abgasanlage einer Brennkraftmaschine oder zu einer sonstigen Verbrauchsstelle fördert.

Die Filtereinrichtung 16 und die Pumpe 18 sind in Fig. 3 getrennt voneinander dargestellt mit dem Verbindungselement 17 zur Weiterleitung der Flüssigkeit 2. Die Filtereinrichtung 16 und die Pumpe 18 können auch direkt nebeneinander angeordnet werden, so dass das Verbindungselement 17 entbehrlich ist. Die Filtereinrichtung 16, die Pumpe 18, der Auslaufbereich 8 und das Entnahmerohr 7 können zusammen auch als eine Entnahmeeinrichtung bezeichnet werden, die (zusammen mit der Heizeinrichtung 19) bevorzugt in einem zentralen bzw. mittleren Bereich der Grundplatte 12 des Tankmoduls 3 angeordnet ist.

Gemäß der Darstellung in Fig. 3 ist im Zusammenhang mit der Filtereinrichtung 16 eine Heizeinrichtung 19 vorgesehen, die einerseits die Filtereinrichtung 16 zumindest teilweise umgibt und die andererseits von der Flüssigkeit 2 umströmt wird. Die Heizeinrichtung 19 steht hinsichtlich einer Übertragung von Daten und elektrischer Leistung mit der Steuerungseinrichtung 9 über entsprechende Leitungen in Verbindung.

Wird die Heizeinrichtung 19 betrieben, wird der Bereich der Flüssigkeit 2 in der unmittelbaren Umgebung der Heizeinrichtung 19 und auch die in der Filtereinrichtung 16 befindliche Flüssigkeit 2 durch Aufnahme der von der Heizeinrichtung 19 abgegebenen thermischen Energie erwärmt. Besteht somit die Gefahr, dass die Flüssigkeit 2 in dem Tank 1 und in unmittelbarer Umgebung des Tankmoduls 3 soweit abkühlt, dass ein Einfrieren möglich ist, kann die Heizeinrichtung 19 betrieben werden, so dass zumindest bei einer sehr stark abgekühlten Flüssigkeit 3 unter den Gefrierpunkt (beispielsweis tiefer als etwa -11 °C bei einer wässrigen Harnstofflösung) ein Einfrieren verhindert wird oder bereits gefrorene Flüssigkeit 2 wieder aufgetaut wird, so dass bald nach dem Starten der Brennkraftmaschine eine ausreichende Menge an flüssigem Reduktionsmittel für eine wirksame Abgasreinigung zur Verfügung steht.

Die vorstehend beschriebenen Komponenten des Tankmoduls 3, die dem Funktionsbereich 6 auf der Grundplatte 12 als Teil des Gehäuses 5 des Tankmoduls 3 angeordnet sind, stehen in entsprechender Verbindung mit der Steuerungseinrichtung 9, so dass die Steuerungseinrichtung 9 einerseits vorgesehen ist, die jeweiligen Komponenten anzusteuern, um beispielsweise Erfassungen durchzuführen oder eine Behandlung der Flüssigkeit 2 vorzunehmen, beispielsweise die Pumpe 18 zu betreiben, und dass andererseits Erfassungsergebnisse aufgenommen und verarbeitet werden, so dass eine allgemeine Steuerung des Betriebs des Tankmoduls 3 gewährleistet ist oder auch einzelne Regelungen, wie beispielsweise eine Temperaturregelung in Verbindung mit einer Leistungsregelung der Heizeinrichtung 19 oder der Förderleistung der Pumpe 18 möglich sind.

Fig. 4 zeigt in diesem Zusammenhang ein Blockschaltbild der Anordnung des Tankmoduls 3 im Hinblick auf die elektrischen Verbindungen (Verbindungen zur Leistungsversorgung und zur Übertragung von Daten und Anweisungen in jeweils beide Richtungen).

Die Steuerungseinrichtung 9 umfasst eine Zentraleinheit 20 zur Durchführung von Steuerungs- und/oder Regelungsmaßnahmen und zur Auswertung von Daten, beispielsweise in Verbindung mit entsprechenden Erfassungsergebnissen. Programme und entsprechende Daten können in einem Speicher 21 zeitweilig oder fest gespeichert werden. Die Steuerungseinrichtung 9 umfasst ferner einen Eingabe/Ausgabebereich, der nachstehend als Schnittstelle 22 bezeichnet wird. Die Schnittstelle 22 steht mit der Zentraleinheit 20 sowie mit den vorstehend genannte Komponenten des Tankmoduls 3, wie dem Füllstandmesser 13, dem ersten Temperatursensor 14, dem Eigenschaftensensor 15, der Pumpe 18 und der Heizeinrichtung 19 in Verbindung. Des Weiteren kann die Zentraleinheit 20 über die Verbindungsleitung 10 und eine mögliche Steckereinrichtung 11 mit einer externen Computeranlage 23 (die nicht Teil des Tankmoduls 3 ist, jedoch mit diesem verbindbar ist) in Verbindung stehen. Über die Schnittstelle 22 können Daten und elektrische Leistung zu den vorstehend angegebenen Komponenten (13, 14, 15, 18, 19) übertragen und von diesen Komponenten erhalten werden. Die Steuerungseinrichtung 9 bewirkt ein Ansteuern der entsprechenden Komponenten beispielsweise zur Durchführung von Erfassungen und nimmt die Erfassungsdaten zur Auswertung auf. Auf diese Weise wird kontinuierlich oder in bestimmten zeitlichen Abständen mittels des ersten Temperatursensors 14 die Temperatur der Flüssigkeit in der Umgebung des Füllstandmessers 13 erfasst und es wird ebenfalls der Eigenschaftgensensor zur Erfassung der Eigenschaften der Flüssigkeit 2 betrieben. Bei entsprechendem Bedarf an Reduktionsmittel wird in Abhängigkeit von diesem Bedarf die Pumpe 18 angesteuert, ebenso die Heizeinrichtung 19 in Abhängigkeit von der Temperatur.

Fig. 4 zeigt des Weiteren einen externen, d. h. außerhalb des Tankmoduls 3 angeordneten Temperatursensor 24, der bedarfsweise vorgesehen ist zur Erfassung der Umgebungstemperatur, in der die industrielle Maschine, das Kraftfahrzeug oder dergleichen betrieben wird. Der externe bzw. äußere Temperatursensor 24, der nicht unmittelbar Teil des Tankmoduls 3 ist, ist ebenfalls mit der Steuerungseinrichtung 9 verbindbar und liefert zur Auswertung vorgesehene Temperaturdaten als Umgebungsbedingungen, beispielsweise bei dem Betrieb eines Kraftfahrzeugs.

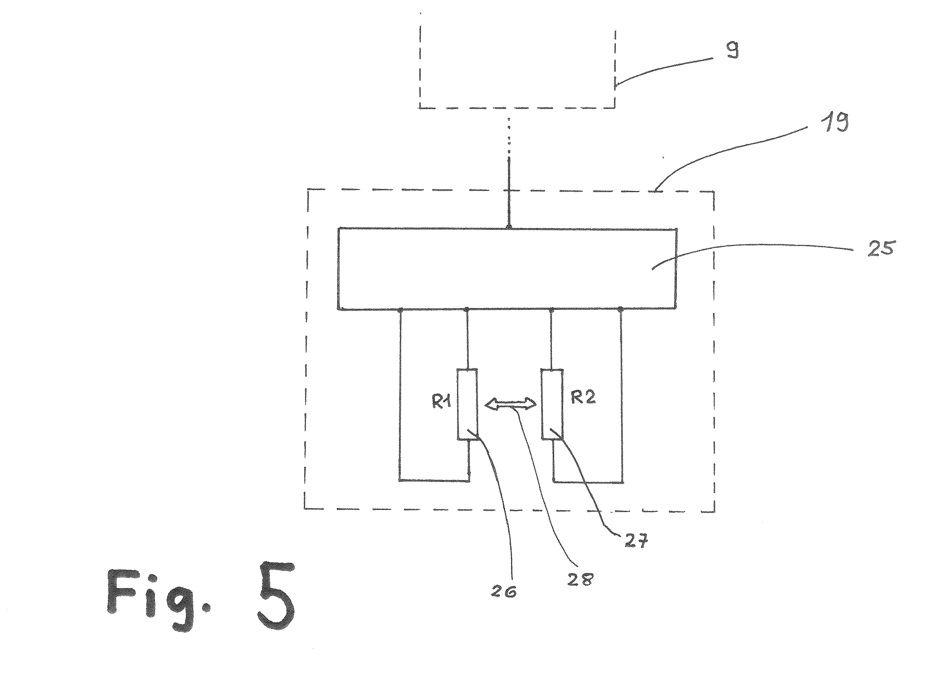

Fig. 5 zeigt weitere Einzelheiten der Heizeinrichtung 19, die nachstehend im Einzelnen hinsichtlich ihres Aufbaus und ihrer Wirkungsweise beschrieben wird.

Gemäß Fig. 5 umfasst die Heizeinrichtung 19 eine Steuereinheit 25 und zumindest ein erstes Heizelement 26 und ein zweites Heizelement 27, die in Fig. 5 in Form von Widerständen (Heizwiderstände) R1 und R2 veranschaulicht sind. Die Heizeinrichtung 19 und insbesondere die beiden Heizelemente 26 und 27 stehen (elektrisch isoliert und an der Oberfläche korrosionsgeschützt) mit der Flüssigkeit 2 in Verbindung, so dass auf die Flüssigkeit 2 ein Wärmeübergang stattfinden kann. Die weitere Wärmekopplung der beiden Heizelemente 26 und 27 über die Flüssigkeit 2 ist mittels eines Pfeils 28 veranschaulicht.

In der Darstellung gemäß Fig. 5 umfasst somit die Heizeinrichtung 19 die zumindest zwei Heizelemente (beispielsweise die Heizelemente 26 und 27), wobei die vorliegende Erfindung auf diese Anzahl nicht festgelegt ist. Vielmehr können auch mehr als zwei Heizelemente vorgesehen sein. Die einzelnen Heizelemente, wie die zumindest zwei Heizelemente 26 und 27, können gleichartig ausgeführt sein oder könne auch unterschiedliche elektrische Werte (beispielsweise die individuelle Heizleistung) und mechanische Ausführungen bzw. Anordnungen aufweisen.

In Fig. 5 ist die Steuereinheit 25 gezeigt, die entsprechende Steuersignale und elektrische Leistung von der Steuerungseinrichtung 9 erhält. Alternativ besteht die Möglichkeit, dass die Steuerungseinrichtung 9 direkt die zumindest zwei Heizelemente 26 und 27 (Heizwiderstände R1 und/oder R2) oder weitere Heizelemente gleicher oder unterschiedlicher Art ansteuert.

Hinsichtlich der Wirkungsweise der Heizeinrichtung unter Steuerung durch die Steuerungseinrichtung 9 und fallweise durch die Steuereinheit 25 und in der nachfolgenden Beschreibung speziell der beiden Heizelemente 26 und 27 können beide Heizelemente 26 und 27 gleichzeitig betrieben werden, oder es kann eines der beiden Heizelemente (26 oder 27) zum Erwärmen der Flüssigkeit 2 betrieben werden, wobei die entsprechende Heizleistung zugeführt wird. Werden die beiden Heizelemente 26 und 27 hinsichtlich ihrer Heizleistung unterschiedlich ausgeführt, bestehen am Beispiel der zumindest zwei Heizelemente 26 und 27 drei verschiedene Heizleistungen bei gleicher Versorgungsspannung, mittels denen in Abhängigkeit von einer Temperaturerfassung die Erwärmung der Flüssigkeit 2 oder ein Auftauen der Flüssigkeit 2 bei sehr tiefen Temperaturen möglich ist.

Der erste Temperatursensor 14 gemäß Fig. 4 ist in der Nähe des Füllstandmessers 13 und somit vorzugsweise an einer Seite der Grundplatte 12 des Tankmoduls 3 mit einem gewissen Abstand zur Heizeirichtung 19, zur Filtereinrichtung 16 und zur Pumpe 18 angeordnet. Die Temperaturinformation des ersten Temperatursensors 14 kann somit lediglich ungefähre Werte bezüglich einer Temperatur der Flüssigkeit 2 am Ort der Heizeinrichtung 19 bereitstellen.

Mit der Ausbildung der Heizeinrichtung 19 mittels zumindest zweier Heizelemente (beispielsweise 26 und 27, R1 und R2)) erfolgt eine Steuerung durch die Steuerungseinrichtung 9 in der Weise, dass eines der Heizelemente (26 oder 27) entsprechend angesteuert wird zur Abgabe von Wärme zum Erwärmen der Flüssigkeit 2, und das verbleibende Heizelement (27 oder 26) in der Weise angesteuert wird, dass keine Heizleistung zugeführt wird, sondern eine Erfassung des temperaturabhängigen Widerstands dieses Heizelements erfasst wird, zur Bestimmung der Temperatur in der näheren Umgebung der Heizeinrichtung 19.

Hierzu bewirkt die Steuerungseinrichtung 9 ein entsprechendes Ansteuern der Heizeinrichtung 19 und im einzelnen der zumindest zwei Heizelemente 26 und 27, so dass in Abhängigkeit vom Bedarf beide Heizelemente 26 und 27 zum Erwärmen der Flüssigkeit 2 angesteuert werden oder dass eines der Heizelemente 26 oder 27 als Temperaturfühler dient, der somit als zweiter Temperatursensor bezeichnet werden kann.

Im Ergebnis kann mit der Aufteilung der Heizeinrichtung 19 in zumindest zwei getrennt ansteuerbare Heizelemente 26 und 27und der räumlichen Nähe der zumindest zwei Heizelemente 26 und 27 zueinander eine Temperaturerfassung durchgeführt werden, die sehr genau und verlässlich die Temperaturverhältnisse in der unmittelbaren Umgebung der Heizeinrichtung 19 beschreibt, so dass einerseits erkannt werden kann, wenn bei sehr tiefen Temperaturen eine große Heizleistung erforderlich ist, und andererseits erkannt werden kann, wenn die Temperatur der Flüssigkeit 2 in der Umgebung der Heizeinrichtung 19 zu hoch ist zur Vermeidung der Gefahr einer chemischen oder physikalischen Veränderung der Flüssigkeit 2.

Die Steuerungseinrichtung 9 kann hierbei eines der beiden Heizelemente 26 oder 27 zumindest zeitweilig oder kontinuierlich als zweiter Temperatursensor ansteuern, wobei des Weiteren eine Ansteuerung der zumindest zwei Heizelemente 26 und 27 in der Weise möglich ist, dass eines der Heizelemente 26 oder 27 frühzeitig zum Aufwärmen der Flüssigkeit 2 angesteuert wird, während das andere Heizelement als zweiter Temperatursensor angesteuert wird, und nach einer 15 sicheren Erfassung der Umgebungstemperatur innerhalb der Flüssigkeit 2 beide Heizelemente 26 und 27 bei erhöhtem Wärmebedarf zum Erwärmen der Flüssigkeit 2 angesteuert werden. Zyklisch oder auch kontinuierlich für eine vorbestimmte Zeitdauer kann immer wieder eines der beiden Heizelemente 26 oder 27 unabhängig vom jeweils anderen als (zweiter) Temperatursensor betrieben werden. Die zumindest zwei Heizelemente 26 und 27 sind somit in Form zweier getrennter Stromkreise beschältet. Beide Heizelemente 26 und 27 können durch die Steuerungseinrichtung 9 getrennt, d. h. unabhängig voneinander angesteuert und/oder gleich oder unterschiedlich betrieben werden.

Somit ist eine authentische und sichere Temperaturerfassung in der unmittelbaren Umgebung der Heizeinrichtung 19, der Filtereinrichtung 16 und der Pumpe 18 gewährleistet, so dass auch bei ungünstigen Temperaturbedingungen ein schnelles Erwärmen der Flüssigkeit 2 gewährleistet ist, wobei ein Überhitzung wirksam vermieden werden kann. Die Temperaturerfassung kann ohne oder mit nur einer sehr geringen thermischen Verzögerung erfasst werden, da die Heizeinrichtung 19 und damit das als zweiter Temperatursensor betriebene Heizelement 26 oder 27 benachbart zur Entnahmeeinrichtung (7, 8, 16, 18) angeordnet ist. Mit der elektrischen Trennung der beiden Heizelemente26 und 27 kann grundsätzlich das andere Heizelement zum Aufheizen betrieben oder auch (zumindest zeitweilig) abgeschaltet werden, während das eine Heizelement als zweiter Temperatursensor angesteuert und betrieben wird.

In der Darstellung gemäß Fig. 3 ist die Heizeinrichtung 19 ganz oder zumindest teilweise um die Filtereinrichtung 16 angeordnet. Hierbei kann die Heizeinrichtung 19 aus zumindest zwei Widerstandsspulen zur Bildung der beiden Heizwiderstände R1 und R2 des ersten und zweiten Heizelements 26 und 27 bestehen. Die beiden Widerstandsspulen können auf einem gemeinsamen Träger für jeweils getrennte Ansteuerungen ausgebildet sein, wobei der unmittelbare thermische Kontakt der Spulen untereinander (der jeweiligen Heizelemente 26 und 27) vermindert ist, währen der Kontakt mit der einerseits zu erwärmenden und andererseits hinsichtlich der Temperatur zu erfassenden Flüssigkeit 2 gewährleistet ist. Die Widerstandsspulen der Heizelemente 26 und 27 sind getrennt ansteuerbar und betreibbar.

In einer alternativen Ausführungsform kann die Heizeinrichtung 19 derart ausgebildet sein, dass eines der zumindest zwei Heizelemente 26 oder 27 unmittelbar benachbart zur Filtereinrichtung 16 angeordnet ist, während das andere der zumindest zwei Heizelemente 26 oder 27 unmittelbar benachbart zu der Pumpe 18 angeordnet ist. Auf diese Weise ist ebenfalls eine realistische Temperaturerfassung der Flüssigkeit 2 im Umgebungsbereich der Filtereinrichtung 16 und der Pumpe 18 gewährleistet. Ferner können die zumindest zwei Heizelemente 26 und 27 benachbart zur Filtereinrichtung 16 angeordnet sein, und es kann zumindest ein weiteres Heizelement auf oder benachbart zu der Pumpe 18 angeordnet sein. Das weitere (im vorliegenden Beispiel das dritte) Heizelement kann auch die Pumpe zumindest teilweise umgeben. Sämtliche dieser mehreren Heizelemente (26, 27, ...) sind getrennt und unabhängig voneinander mit gleichen oder unterschiedlichen Funktionen (Heizung oder Temperaturerfassung) zu betreiben.

Im Ergebnis kann eine verlässliche Temperaturerfassung mit keiner oder nur einer geringen thermischen Verzögerung erreicht werden, die eine Inforation hinsichtlich der Temperatur der Flüssigkeit in der Umgebung der Heizeinrichtung und auch der Entnahmeeinrichtung (7, 8, 16, 18) liefert. Im Verlauf der Lebensdauer der Heizeinrichtungen können Veränderungen beispielsweise der elektrischen Eigenschaften erkannt werden, speziell durch einen Vergleich von Erfassungen der Temperatur mittels des einen oder des anderen der zumindest zwei Heizelemente 26 und 27 und einer anschließenden Korrelation der Erfassungswerte. Ebenso könne Leitungsunterbrechungen erkannt werden. Die elektrischen Eigenschaften der zumindest zwei (oder mehreren) Heizelemente 26 und 27 können ständig hinsichtlich der elektrischen Werte und auch hinsichtlich einer Plausibilität der Erfassung überprüft werden (Verifikation der Werte). Auf diese Weise lasen sich mit der erfindungsgemäßen Anordnung und der Wirkungsweise Fehlmessungen oder im Verlauf der Zeit an Genauigkeit verlierende Erfassungen der Temperatur der Flüssigkeit 2 vermeiden. Es kann auch ein Vergleich mit dem Erfassungsergebnis des ersten Temperatursensors 14 erfolgen. Die erfindungsgemäße Anordnung ist auch beständig gegenüber beispielsweise in einem Kraftfahrzeug herrschenden Stößen und Vibrationen.

### Zweites Ausführungsbeispiel:

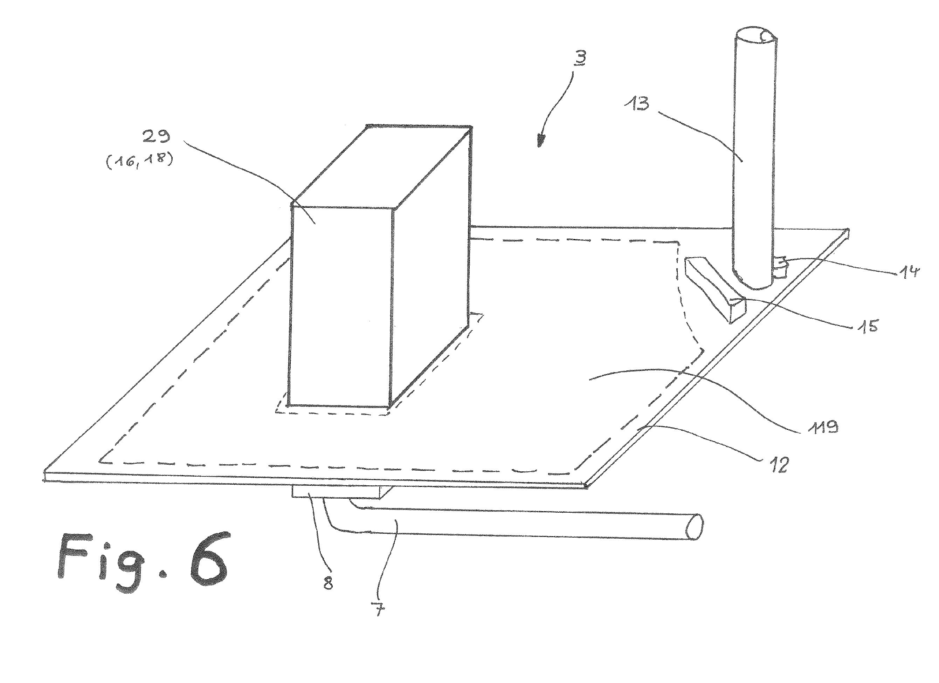

Fig. 6 zeigt ein zweites Ausführungsbeispiel der Anordnung des Tankmoduls 3 im Vergleich zur Anordnung des Tankmoduls 3 gemäß dem ersten Ausführungsbeispiels in Verbindung mit Fig. 3.

Gemäß Fig. 6 sind in gleicher Weise wie bei dem ersten Ausführungsbeispiel gemäß Fig. 3 auf der Grundplatte 12 der Füllstandmesser 13 und der erste Temperatursensor 14 sowie der Eigenschaftensensor 15 angeordnet. De Aufbau und die Funktionen dieser Komponenten sind gleichartig zu den entsprechenden Komponenten des ersten Ausführungsbeispiels, so dass eine weitere Beschreibung weggelassen ist. Ferner ist auf der Grundplatte 12 und vereinfacht dargestellt in Verbindung mit einem Block eine Filter-Pumpen-Einheit 29 angeordnet, in der die Filtereinrichtung 16 und die Pumpe 18 integriert sind. Die Filter-Pumpen- Einheit 29 befindet sich in einem zentralen oder mittleren Bereich der Grundplatte 12 und steht in Verbindung mit dem Auslaufbereich 8 und dem Entnahmerohr 7 zum Entnehmen der Flüssigkeit 2, die die vorstehend genannten Komponenten des Tankmoduls 3 umgibt und umströmt. Verbindungsleitungen der einzelnen Komponenten zur Steuerungseinrichtung 9 sind zur Vereinfachung der Darstellung weggelassen, sind jedoch gleichartig zu den entsprechenden Verbindungsleitungen gemäß Fig. 3.

Auf der Grundplatte 12 ist ferner eine Heizeinrichtung 119 angeordnet, die eine ähnliche Wirkung zum Erwärmen der Flüssigkeit 2 wie die Heizeinrichtung 19 gemäß dem ersten Ausführungsbeispiel aufweist, jedoch hinsichtlich des Aufbaus von der Anordnung der Heizeinrichtung 19 des ersten Ausführungsbeispiels abweicht.

Die Heizeinrichtung 119 gemäß dem zweiten Ausführungsbeispiel ist flächig auf der Grundplatte 12 angeordnet, wobei dies in Fig. 6 mit einer gestrichelten Linie angedeutet ist, innerhalb der die Heizeinrichtung 119 ausgebildet ist. Im Bereich der Filter-Pumpen-Einheit 29 kann die Heizeinrichtung 119 ausgespart sein. Mit dieser Anordnung befindet sich die Heizeinrichtung 119 in gleicher Weise wie die Heizeinrichtung 19 des ersten Ausführungsbeispiels benachbart zur Filter- Pumpen-Einheit 29 und damit benachbart zur Entnahmeeinrichtung, die gemäß dem zweiten Ausführungsbeispiel die vorstehend beschriebenen Komponenten 7, 8 und 29 umfasst.

Die Heizeinrichtung 119 kann dabei als eine Folie mit entsprechenden Widerstandsflächen auf der Grundplatte 12 angeordnet sein, oder es können die Widerstandsflächen direkt auf der Grundplatte 12 beispielsweise mittel eines Druckvorgangs ausgebildet werden, wobei die Heizeinrichtung 119 großflächig mit der Flüssigkeit 2 in Verbindung steht und an ihrer (in Fig. 6) oberen Oberfläche eine Isolierschicht aufweist, die die Heizeinrichtung 119 gegenüber der Flüssigkeit 2 elektrisch isoliert und vor Korrosion schützt. Des Weiteren sind die zumindest zwei Heizelemente (flächige Widerstandsbereiche R11 und R12) oder auch weitere Heizelemente elektrisch voneinander getrennt zur individuellen Ansteuerung durch die Steuerungseinrichtung 9

Das schematische Schaltbild der Heizeinrichtung 19 gemäß dem ersten Ausführungsbeispiel und der Darstellung in Fig. 5 trifft ebenfalls auf die Heizeinrichtung 119 gemäß dem zweiten Ausführungsbeispiel zu, wobei die Heizeinrichtung 119 ebenfalls zumindest zwei einzelne Heizelemente 126 und 127 aufweist. Das in Fig. 4 gezeigte Blockschaltbild gilt ebenfalls für das Tankmodul 3 gemäß dem zweiten Ausführungsbeispiel (Prinzipdarstellung).

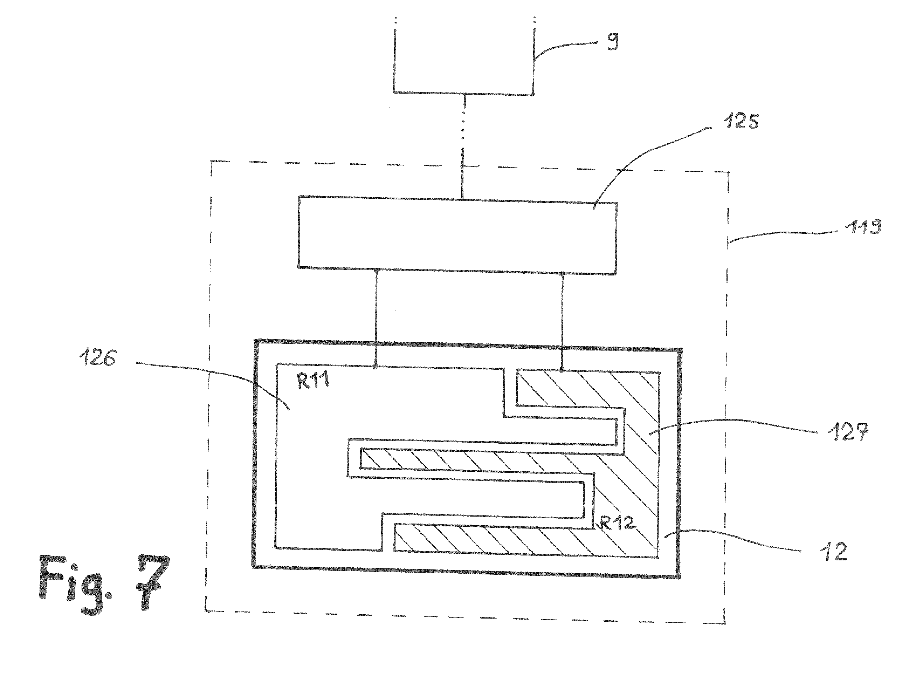

In diesem Zusammenhang zeigt Fig. 7 weitere Einzelheiten der Heizeinrichtung 119 gemäß dem zweiten Ausführungsbeispiel, wobei die flächig ausgeführten zumindest zwei Heizelemente 126 und 127 in Form von flächigen im Wesentlichen unregelmäßigen Widerstandsbereichen oder Heizwiderständen R11 und R12 dargestellt sind. Beide Heizelemente 126 und 127 weisen damit unregelmäßige Flächen auf, die als Widerstandsbereiche ausgebildet sind und die teilweise ineinandergreifen, so dass Flächen eines der beiden Heizelemente teilweise von Flächen des jeweils anderen Heizelements umgeben sind. Die zur Flüssigkeit 2 gerichtete Oberfläche der jeweiligen Heizelemente 126 und 127 ist isoliert und korrosionsgeschützt ausgeführt, wobei jedoch eine gute thermische Ankopplung zur Übertragung der Heizwärme der Heizeinrichtung 119 zur Flüssigkeit 2 gewährleistet ist.

Fig. 7 zeigt die unregelmäßigen flächigen Ausbildungen der zumindest zwei Heizeinrichtungen 126 und 127, die getrennt und voneinander unabhängig entweder direkt über die Steuerungseinrichtung 9 oder die Steuereinheit 125 angesteuert werden können. Fig. 7 veranschaulicht somit schematisch einen Teil der Grundplatte 12 des Tankmoduls (zur Vereinfachung ohne weitere Komponenten), wobei lediglich die unregelmäßigen Flächen der flächigen Heizwiderstände R11 und R12 der jeweiligen zumindest zwei Heizelemente 126 und 127 dargestellt sind.

In Fig. 7 (und schematisch in Fig. 5) sind beispielhaft die beiden Heizelemente und 127 gezeigt, wobei die Erfindung hierauf nicht festgelegt ist und auch mehr als zwei getrennt ansteuerbare Heizelemente vorgesehen sein können.

Die zumindest zwei oder auch mehr als zwei Heizelemente 126 und 127 können dabei gleichartig oder unterschiedlich ausgeführt werden hinsichtlich ihrer elektrischen Werte oder der Flächenausdehnung und Flächenform auf der Grundplatte 12. In diesem Zusammenhang zeigt in Fig. 7 die Schraffur der Oberfläche des zweiten Heizelements 127 keine Schnittdarstellung sondern dient zum leichteren Unterscheiden der zumindest zwei Heizelemente 126 und 127 bzw. der entsprechenden Widerstandsbereiche (Heizwiderstände R11 und R12).

Mit der Anordnung der zumindest zwei Heizelemente 126 und 127 der Heizeinrichtung 119 gemäß dem zweiten Ausführungsbeispiel werden die gleichen Vorteile erzielt wie mit der Heizeinrichtung 19 gemäß dem ersten Ausführungsbeispiel. Die zumindest zwei Heizelemente 126 und 127 können getrennt angesteuert werden zum Bereitstellen einer entsprechenden Heizleistung zum Erwärmen der Flüssigkeit 2, oder es kann eines der zumindest zwei Heizelemente 126 oder 127 zur Abgabe einer Wärme angesteuert werden, und das jeweils andere Heizelement 127 oder 126 kann als der zweite Temperatursensor dienen. Nach einer Temperaturerfassung können auch zeitweilig (d. h. während einer vorbestimmten Zeitdauer) beide Heizelemente gleichzeitig zur Wärmeabgabe betrieben werden.

Im Falle der Ansteuerung eines der zumindest zwei Heizelemente 126 oder 127 als zweiter Temperatursensor wird eine hinsichtlich einer Wärmeübertragung erforderliche Kopplung zwischen den zumindest zwei Heizelementen 126 und 127 über die Flüssigkeit 2 gebildet, die flächig über den Heizelementen 126 und 127 angeordnet ist und wobei mit dieser Anordnung des zweiten Ausführungsbeispiels mit der flächenmäßigen Ausbildung der Heizwiderstände R11 und R12 eine annähernd gleichmäßige Temperaturverteilung in dem Bereich der Flüssigkeit 2 benachbart zur Heizeinrichtung 119 erreicht wird. Speziell kann infolge der teilweise ineinander greifenden isolierten Widerstandsflächen (zumindest die beiden Heizwiderstände R11 und R12) über die Flüssigkeit 2 eine gute Wärmekopplung ohne oder nur mit einer vernachlässigbaren thermischen Verzögerung erreicht werden, so dass die Erfassung der Temperatur mittels eines der zumindest zwei Heizelemente 126 oder 127 sehr schnell erfolgt und genau und verlässlich ist. Hierbei ist das betreffende Heizelement 126 oder 127, das als der zweite Temperatursensor betrieben wird, räumlich und in bestimmtem Umfang auch thermisch (funktionell) von dem ersten Temperatursensor 14 entkoppelt.

Zusätzlich zu den Vorteilen der Heizeinrichtung 19 des Tankmoduls 3 gemäß dem ersten Ausführungsbeispiel ergibt sich mit der Anordnung gemäß dem zweiten Ausführungsbeispiel der Vorteil, dass die von der Heizeinrichtung 19 (von zumindest einem der beiden Heizelemente 126 und 127) abgegebene Wärmemenge großflächig auf die Flüssigkeit 2 übertragen werden kann, so dass relativ schnell die Flüssigkeit aufgeheizt werden kann oder im Falle des Gefrierens der Flüssigkeit 2 schnell ein Auftauen im unteren Bereich des Tankmoduls 3 unmittelbar über der Heizeinrichtung 119 gewährleistet ist und somit die aufgetaute Flüssigkeit 2 mittels der Pumpe 18 oder der Filter-Pumpe-Einheit 29 (bzw. der Entnahmeeinrichtung) zu einem Verbrauchsort befördert werden kann. Mit der Ausführung als flächige Widerstandsbereiche kann eine Wärmeabgabe über eine große Fläche oder eine Temperaturerfassung erreicht werden, die im Wesentlichen gemittelt über diese Fläche erfolgt und damit aussagekräftig ist

Wird zeitweilig oder kontinuierlich eine der beiden Heizeinrichtungen 126 oder 127 gemäß dem zweiten Ausführungsbeispiel als der zweite Temperatursensor betrieben, wird in sehr genauer Weise großflächig eine Temperaturerfassung durchgeführt, die in Verbindung mit der flächigen Anordnung der jeweiligen Heizelemente 126 und 127 einen realistischen Mittelwert über die Temperaturverhältnisse in der Flüssigkeit oder der gefrorenen Flüssigkeit 2 liefert. Somit wird eine genaue und verlässliche Information zur Durchführung einer Regelung und insbesondere zur Dimensionierung der erforderlichen Heizleistung gewonnen. Liegt ein erhöhter Wärmebedarf vor, können nach erfolgter Messung oder in Verbindung mit einem intermittierenden Betrieb beide Heizeinrichtungen 126 und 127 zur Abgabe einer Heizleistung angesteuert werden, während zeitweilig zur Erfassung der Temperaturwerte eines der beiden Heizelemente 126 oder 127 in der Funktion des zweiten Temperatursensors angesteuert wird.

Eine Auswertung der gewonnenen Information erfolgt in der Steuereinheit 125 und/oder in der Steuerungseinrichtung 9, wobei in der Anordnung von Fig. 7 auch die Steuerungseinrichtung 9 direkt die beiden Heizeinrichtungen 126 und 127 entsprechend der gewünschten Funktion (Sensor oder Heizung) ansteuern kann. Bevorzugt kann das Heizelement der Heizeinrichtung 126 oder 127, das benachbart zur Filter-Pumpen-Einheit 29 oder der Entnahmeeinrichtung angeordnet ist, im Sinne einer Aufheizung angesteuert werden, um eine gewünschte Temperatur der Flüssigkeit 2 in der Nähe dieser Komponenten zu erreichen, während das andere der zumindest zwei Heizelemente 126 oder 107 als der zweite Temperatursensor betrieben wird. Es ist dabei eine annähernd verzögerungsfreie Temperaturerfassung gewährleistet.

Die Darstellung der Heizeinrichtung 119 gemäß dem zweiten Ausführungsbeispiel in Fig. 7 ist vereinfacht und schematisch, wobei in ähnlicher flächenmäßiger Verteilung die zumindest zwei Heizelemente 126 und 127 auf der gemäß Fig. 6 zur Verfügung stehenden Fläche der Grundplatte 12 ausgebildet sein kann. In einer weiteren Abwandlung besteht ebenfalls die Möglichkeit, in ähnlicher Weise, wie es in Fig. 3 dargestellt ist, die Filtereinrichtung 16 und die Pumpe 18 unmittelbar benachbart zueinander, jedoch getrennt anzuordnen. In der Nähe des Auslaufbereichs 8 und/oder der Filter-Pumpen-Einheit 29 ist vorzugsweise bei den zumindest zwei Heizelementen 126 und 127 eine entsprechende Aussparung vorgesehen.

In den vorstehend beschriebenen Figuren ist die Grundplatte 12 zur Vereinfachung der Darstellung als eine ebene Platte gezeigt, die einen Teil des Tankmoduls 3 bzw. des Gehäuses 5 bildet. Die vorliegende Erfindung ist jedoch nicht in der Weise beschränkt, dass die Grundplatte 12 eine ebene Platte ist, sondern es besteht die Möglichkeit, die Grundplatte 12 als eine nach oben oder nach unten gewölbte oder auch sphärisch gewölbte Platte auszubilden, wobei in diesem Fall die flächig ausgebildeten Widerstandsbereiche R11 und R12 der zumindest zwei Heizelemente 126 und 127 im Wesentlichen der Kontur und Form der Grundplatte 12 folgen. Die Funktion im Hinblick auf die Abgabe von Wärme zum Erwärmen der Flüssigkeit 2 und zur Durchführung einer Temperaturerfassung mit einem der zumindest zwei Heizelemente 126 und 127 (oder 26 und 27 gemäß dem ersten Ausführungsbeispiel) ist davon unabhängig.

Die zumindest zwei Heizeinrichtungen 26 und 27 oder 126 und 127 bilden somit zwei voneinander getrennt ansteuerbare oder auch galvanisch getrennte Stromkreise, so dass auch hinsichtlich der Heizleistung die zumindest zwei oder mehreren und gegeneinander isolierten Heizelemente völlig unabhängig voneinander ansteuerbar sind. Auch können die jeweiligen einzelnen Heizelemente 26, 27, 126 und 127 der Heizeinrichtungen 19 und 119 in beliebiger Kombination als Heizeinrichtung oder als zweiter Temperatursensor geschaltet werden, so dass hinsichtlich der Erfassung der Temperatur auch wechselweise unterschiedliche Heizeinrichtungen zeitweilig als zweiter Temperatursensor angesteuert werden können, um auf diese Weise großflächig und in Verbindung mit unterschiedlichen Bedingungen der Temperaturverhältnisse in der Flüssigkeit 2 die genaue Temperatur oder verlässliche durchschnittliche Temperatur über eine relativ großen Flächenbereich (zweites Ausführungsbeispiel) zu erfassen.

Da beide gleiche oder unterschiedliche Heizelemente jeweils zu bestimmten Zeiten (zeitweilig) zur Aufheizung oder als Temperatursensor geschaltet bzw. angesteuert werden können, ist es möglich, Defekte der einzelnen Heizelemente oder im Verlauf des Betriebs auftretende Verschlechterungen eindeutig messtechnisch zu erfassen, so dass einerseits eine ständige Funktionsprüfung gewährleistet ist, und andererseits mit zumindest zwei Heizelementen der Heizeinrichtung eine gewisse Redundanz vorliegt.

### Drittes Ausführungsbeispiel:

Nachstehend wird in Verbindung mit den Figuren 3, 4 und 6 in drittes Ausführungsbeispiel der Erfindung beschrieben, das gegenüber dem ersten und zweiten Ausführungsbeispiel auf einer Heizeinrichtung 19 oder 119 beruht, die zumindest ein Heizelement, beispielsweise nur ein Heizelement ausweist.

In diesem Ausführungsbeispiel liegt in der Heizeinrichtung 19 gemäß Fig. 3 oder der Heizeinrichtung 119 gemäß Fig. 6 lediglich ein Heizelement vor, das mittel der Steuerungseinrichtung 9 entsprechend der Darstellung in Fig. 4 angesteuert werden kann. Der grundlegende Aufbau ist derselbe, wie er in Verbindung mit dem ersten und zweiten Ausführungsbeispiel anhand der Figuren 1 und 2 beschrieben wurde.

Die Ansteuerung durch die Steuerungseinrichtung 9 umfasst das Ansteuern der Heizeinrichtung 19 oder 119 zur Abgabe von Wärme, indem in Abhängigkeit von einer zu erbringenden Heizleistung entsprechende Spannung und Ströme an das Heizelement angelegt werden. Die Heizeinrichtung 19 oder 119, die in thermischem Kontakt zur Flüssigkeit 2 steht und die das eine Heizelement aufweist dient in diesem Fall zur Aufheizung oder zum Auftauen der Flüssigkeit 2.

Die Steuerungseinrichtung 9 ist ebenfalls ausgebildet, das Heizelement der Heizeinrichtung derart anzusteuern, dass dieses anstelle der Abgabe von Wärme zur Erfassung der Temperatur der im Wesentlichen in der Nachbarschaft zu dem Heizelement befindlichen Flüssigkeit 2 dient. Durch Erfassen der elektrischen Werte des Heizelements werden in Verbindung mit einer dem Heizelement eigenen Kennlinie bezüglich eines elektrischen Widerstands und einer Umgebungstemperatur (hier der Temperatur der Flüssigkeit) Kenntnisse über die Temperatur der Flüssigkeit erhalten.

Das Heizelement der Heizeinrichtung 19 oder 119 kann dabei in Form einer Widerstandsspule (Widerstanddraht) gemäß Fig. 3 oder in Form eines flächig ausgebildeten Widerstandsbereichs gemäß Fig. 6 vorliegen. Im Fall der Widerstandsspule kann das (zumindest) eine Heizelement angeordnet werden, wie es in Verbindung mit dem ersten Ausführungsbeispiel beschrieben ist. Im Fall der Ausbildung mit einem flächigen Widerstandsbereich kann dieser zumindest einen Teil der Grundplatte 12 oder den gesamten Bereich der Grundplatte 12 einnehmen, wie er in Fig. 6 mittels einer gestrichelten Linie dargestellt ist, so das in gleicher Weise wie beim zweiten Ausführungsbeispiel entweder die Wärmeabgabe bei einem Betrieb zur Aufheizung der Flüssigkeit über eine große Fläche auf die Flüssigkeit 2 erfolgt, oder die Temperatur der Flüssigkeit 2 im Wesentlichen gemittelt über die Fläche des Widerstandsbereichs bei einem Betrieb als eine Sensoreinrichtung zur Erfassung der Flüssigkeitstemperatur erfolgt.

Der flächige Widerstandsbereich kann dabei mäandrierend, in Form von einzelnen in Reihe und/oder parallel geschalteten Widerstandsstreifen oder spiralförmig ausgebildet sein. Mit der Ausführung als flächige Widerstandsbereiche kann in gleicherweise wie beim zweiten Ausführungsbeispiel eine Wärmeabgabe über eine große Fläche oder eine Temperaturerfassung erreicht werden, die im Wesentlichen gemittelt über diese Fläche erfolgt und damit aussagekräftig ist.

Die Steuerungseinrichtung 9 kann die Heizeinrichtung 19 oder 119 in entsprechender Weise ansteuern, dass entweder das Heizelement zur Aufheizung oder zur Temperaturerfassung betrieben wird. Die Steuerungseinrichtung 9 bewirkt dabei eine zeitliche Steuerung der Heizeinrichtung 19 oder 119 derart, dass zeitweilig das Heizelement zur Aufheizung angesteuert wird, oder dass das Heizelement zeitweilig zur Temperaturerfassung angesteuert wird, wobei sich die jeweiligen Zeitbereiche nicht überlappen. Die Steuerung des einen oder anderen Betriebs wird in Abhängigkeit von Bedarf vorgenommen oder entsprechend einer Programmierung der Steuerungseinrichtung 9.

Liegt das Heizelement alternativ als ein PTC-Widerstandselement (PTC- Widerstand) vor, dann kann die Temperaturerfassung gleichzeitig zu dem Betrieb der Aufheizung erfolgen, da die Widerstands-Temperaturkennlinie des PTC-Widerstands einen Rückschluss auf die Temperatur ausgehend vor einem Widerstand (Strom und Spannung) ermöglicht. Die gleichzeitige Aufheizung und Temperaturerfassung ist hierbei im Sinne einer Ansteuerung zur Aufheizung und gleichzeitigen Erfassung der elektrischen Werte des Heizelements als Maß für die Temperatur desselben zu verstehen.

Mit der vorstehend beschriebenen Anordnung der Heizeinrichtung kann eine weitere Vereinfachung des Aufbaus des Tankmoduls 3 erreicht werden, wobei die Vorteile, die in Verbindung mit dem ersten und zweiten Ausführungsbeispiel beschrieben wurden, auch für das dritte Ausführungsbeispiel gelten.

Die vorliegende Erfindung wurde vorstehend in Verbindung mit bevorzugten Ausführungsbeispielen und im Zusammenhang mit der Zeichnung näher beschrieben.

Für den auf diesem Gebiet tätigen Fachmann ist es jedoch selbstverständlich, dass die Ausgestaltung der vorliegenden Erfindung gemäß den beschriebenen Figuren und die für die jeweiligen Bauteile und Komponenten verwendeten Bezugszeichen in den Figuren und der Beschreibung sowie die beispielhaften Angaben nicht einschränkend auszulegen sind. Insbesondere sind die in den einzelnen Figuren angegebenen Formen und Proportionen für ein besseres Verständnis schematisch und vereinfacht dargestellt, und es ist die Erfindung somit auf die angegebenen Darstellungen und insbesondere die Dimensionen und Formen nicht beschränkt.

## Patentansprüche

1. Tankmodul zum Einsetzen in einen Öffnungsbereich (4a) eines Tanks (1), der eine Flüssigkeit (2) enthält, die mittels einer Entnahmeeinrichtung (7, 8, 16, 18; 29) entnommen werden kann, mit
- einer benachbart zu der Entnahmeeinrichtung (7, 8, 16, 18; 29) angeordneten Heizeinrichtung (19; 119), die zumindest zwei Heizelemente (26, 27; 126, 127) aufweist, die unabhängig voneinander angesteuert werden können und in einem thermischen Kontakt zur Flüssigkeit (2) stehen, und
- einer Steuerungseinrichtung (9), die mit der Heizeinrichtung (19; 119) verbunden ist zur individuellen Ansteuerung der zumindest zwei Heizelemente (26, 27; 126, 127) der Heizeinrichtung (19; 119), so dass eines der Heizelemente zur Abgabe von Wärme und das andere zumindest zeitweilig zur Erfassung der Temperatur der Flüssigkeit (2) angesteuert wird.

2. Tankmodul nach Anspruch 1, wobei die zumindest zwei Heizelemente (26, 27; 126, 127) der Heizeinrichtung (19; 119) für eine gleiche oder unterschiedliche Heizleistung ausgebildet sind.

3. Tankmodul nach Anspruch 1 oder 2, wobei die zumindest zwei Heizelemente (26, 27; 126, 127) der Heizeinrichtung (19; 119) benachbart und isoliert zueinander angeordnet sind und die Steuerungseinrichtung (9) ausgebildet ist, zeitweilig die beiden Heizelemente (26, 27; 126, 127) zur Abgabe einer Heizleistung anzusteuern.

4. Tankmodul nach einem der Ansprüche 1 bis 3, wobei die zumindest zwei Heizelemente (26, 27) der Heizeinrichtung (19) als drahtförmige Heizwiderstände (R1, R2) ausgebildet sind, oder die zumindest zwei Heizelemente (126,127) der Heizeinrichtung (119) als flächige Widerstandsbereiche (R11, R12) ausgebildet sind.

5. Tankmodul nach Anspruch 4, wobei die flächigen Widerstandsbereiche (R11, R12) gleich große oder unterschiedliche Flächen aufweisen, und die flächigen Widerstandsbereiche unregelmäßig geformte Flächen aufweisen, wobei Flächen eines der Widerstandsbereiche Flächen des anderen Widerstandsbereichs teilweise umgeben.

6. Tankmodul nach Anspruch 4 oder 5, wobei die flächigen Widerstandsbereiche (R11, R12) der zumindest zwei Heizelemente (126, 127) der Heizeinrichtung (119) als folienförmige oder gedruckte Widerstandsbereiche ausgebildet und auf einer ebenen oder gekrümmten Grundplatte (12) des Tankmoduls (3) angeordnet sind.

7. Tankmodul nach einem der Ansprüche 1 bis 3, wobei die zumindest zwei Heizelemente (26, 27) der Heizeinrichtung (19) als drahtförmige Heizwiderstände (R1, R2) ausgebildet sind, und die Entnahmeeinrichtung (7, 8, 16, 18; 29) eine Filtereinrichtung (16) aufweist und die Heizwiderstände (R1, R2) zumindest teilweise die Filtereinrichtung (16) umgeben.

8. Tankmodul nach einem der Ansprüche 1 bis 3, wobei die zumindest zwei Heizelemente (26, 27) der Heizeinrichtung (19) als drahtförmige Heizwiderstände (R1, R2) ausgebildet sind, und die Entnahmeeinrichtung (7, 8, 16, 18; 29) eine Filtereinrichtung (16) und ein Pumpe (18) aufweist und die Heizwiderstände (R1, R2) zumindest teilweise die Filtereinrichtung (16) umgeben, und wobei ein weiteres Heizelement vorgesehen ist, das benachbart zu der Pumpe (18) oder diese zumindest teilweise umgebend angeordnet ist.

9. Tankmodul zum Einsetzen in einen Öffnungsbereich (4a) eines Tanks (1), der eine Flüssigkeit (2) enthält, die mittels einer Entnahmeeinrichtung (7, 8, 16, 18; 29) entnommen werden kann, mit
- einer benachbart zu der Entnahmeeinrichtung (7, 8, 16, 18; 29) angeordneten Heizeinrichtung (19; 119), die ein Heizelement aufweist, das in einem thermischen Kontakt zur Flüssigkeit (2) steht und das zur Aufheizung der Flüssigkeit (2) und/oder zur Erfassung der Temperatur der Flüssigkeit (2) angesteuert werden kann, und
- einer Steuerungseinrichtung (9), die mit der Heizeinrichtung (19; 119) verbunden ist zur Ansteuerung des Heizelements der Heizeinrichtung (19; 119), so dass das Heizelement zeitweilig zur Abgabe von Wärme und /oder zeitweilig zur Erfassung der Temperatur der Flüssigkeit (2) angesteuert wird.

10. Tankmodul nach Anspruch 9, wobei das Heizelement der Heizeinrichtung (19) als ein drahtförmiger Heizwiderstand ausgebildet ist, oder das Heizelement der Heizeinrichtung (119) als flächiger Widerstandsbereich ausgebildet ist.

11. Tankmodul nach Anspruch 10, wobei der flächige Widerstandsbereich des Heizelements der Heizeinrichtung (119) als folienförmiger oder gedruckter Widerstandsbereich ausgebildet und auf einer ebenen oder gekrümmten Grundplatte (12) des Tankmoduls (3) angeordnet ist.

12. Tankmodul nach Anspruch 9, wobei das Heizelement der Heizeinrichtung (19) als drahtförmiger Heizwiderstand ausgebildet ist, und die Entnahmeeinrichtung (7, 8, 16, 18; 29) eine Filtereinrichtung (16) aufweist und der Heizwiderstand zumindest teilweise die Filtereinrichtung (16) umgibt.
